Europäisches Patentamt

European Patent Office

Office européen des brevets

(11) Veröffentlichungsnummer: **0 355 533 A2**

## (12) EUROPÄISCHE PATENTANMELDUNG

(21) Anmeldenummer: **89114469.3**

(22) Anmeldetag: **04.08.89**

(51) Int. Cl.⁴: **H04N 5/45**

(30) Priorität: **17.08.88 DE 3827948**

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Rössler, Werner, Dipl.-Ing.**
**Freischützstrasse 100**
**D-8000 München 81(DE)**

(54) **Verfahren zur Bild-in-Bild-Einblendung und Vorrichtung zur Durchführung des Verfahrens.**

(57) Das erfindungsgemäße Verfahren sieht vor, das bei Wiedergabebetrieb eines Videorekorders entstehende Videosignal zu einem zweiten Videosignal, z. B. ein laufendes Fernsehprogramm, zu synchronisieren und zwischen dem Videosignal des Videorekorders und dem zweiten Videosignal so umzuschalten, daß ein oberes und ein unteres Teilbild am Bildschirm erscheint. Dadurch wird erreicht, daß das auf Videoband aufgezeichnete Videobild in einem oberen oder unteren Bereich des Bildschirmes durch ein Teilbild des zweiten Videosignales überdeckt wird. Dem Bildschirmbetrachter bietet sich so eine einfache Möglichkeit, trotz Betrachtung eines auf ein Videoband aufgezeichneten Videofilmes das Bild des zweiten Videosignales zu kontrollieren und gegebenenfalls ganz auf das zweite Videosignal umzuschalten.

FIG 1

EP 0 355 533 A2

## Verfahren zur Bild-In-Bild-Einblendung

Die Erfindung betrifft ein Verfahren zur Bild-In-Bild-Einblendung nach dem Oberbegriff des Anspruchs 1.

Solche Verfahren zur Bild-In-Bild-Einblendung sind allgemein bekannt. So ist z. B. in IEEE Transactions on Consumer Electronics, Vol. CE 25, February 1979, p. 152 - 157 zur Bild-In-Bild-Einblendung eine Bildspeichereinrichtung vorgesehen durch die ein Kleinbild zeitbasiskorrigiert in ein Großbild eingeblendet werden kann.

Es sind mittlerweile auch Videorekorder bekannt, bei denen eine Bild-In-Bild-Darstellung angeboten wird. Bei diesen Videorekordern ist es vorgesehen, ein Kleinbild, z. B. das Fernsehbild eines gerade laufenden Fernsehprogrammes, in einer Ecke des Großbildes, das dann das Wiedergabebild vom Videoband des Videorekorders ist, einzublenden.

Diese bekannten Anordnungen zur Bild-In-Bild-Darstellung benotigen eine Bildspeichereinrichtung, in der die Videosignaldaten des darzustellenden Kleinbildes gespeichert werden. Ohne eine Bildspeichereinrichtung ist eine Bild-In-Bild-Einblendung nicht möglich.

Der Großteil der heute auf dem Markt befindlichen Videorekorder weist keine Bildspeichereinrichtung auf. Wartet ein Fernsehzuschauer auf den Beginn einer Fernsehsendung, so kann er z. B. während der Wartezeit einen auf Videoband aufgezeichneten Film des Videorekorders betrachten. Nach dem bekannnten Stand der Technik ist es bei Videorekordern ohne Bildspeichereinrichtung allerdings nicht möglich gleichzeitig den Videofilm zu betrachten und das Fernsehprogramm zu kontrollieren.

Der Fernsehzuschauer muß laufend zwischen Fernsehempfang und Wiedergabe des Videorekorders umschalten, um einen bestimmten Anfangszeitpunkt der Fernsehsendung nicht zu verpassen.

Der Erfindung liegt die Aufgabe zugrunde, ein Verfahren und eine Vorrichtung zur Durchführung des Verfahrens anzugeben, mit welchem es bei Videorekordern möglich ist, in einfacher Weise eine Bild-In-Bild-Einblendung zu realisieren ohne eine Bildspeichereinrichtung zu verwenden.

Diese Aufgabe wird erfindungsgemäß durch ein Verfahren mit den kennzeichnenden Merkmalen des Anspruchs 1 gelöst.

Weiterbildungen der Erfindung sind Gegenstand der Unteransprüche.

Eine Vorrichtung zur Durchführung des erfindungsgemäßen Verfahrens ist Gegenstand des Anspruchs 4.

Weiterbildungen der Vorrichtungen sind in den Unteransprüchen 5 und 6 beschrieben.

Gemäß der Erfindung wird der Bildschirm in einen oberen und unteren Teilbereich aufgeteilt. In jedem dieser Teilbereiche wird ein Teilbild eines der Videosignale dargestellt. Die jeweils verdeckte Bildinformation bleibt unsichtbar. Eine z. B. vorgesehene Trennlinie zwischen dem oberen und unteren Teilbild kann z. B. mit Hilfe einer Bedieneinheit, z. B einer Infrarot-Fernbedienung, verschoben werden. Es ist so möglich, die vom zweitrangigen Bild benötigte Bildschirmfläche auf ein Minimum zu reduzieren.

Die Erfindung wird im folgenden anhand von zwei Figuren näher erläutert. Es zeigen:

FIG 1 ein Impulsdiagramm zum erfindungsgemäßen Verfahren, und

FIG 2 eine Vorrichtung zur Durchführung des erfindungsgemäßen Verfahrens unter Verwendung eines Videorekorders mit einer Steuereinrichtung, durch die das erste Videosignal und das zweite Videosignal zueinander synchronisierbar sind.

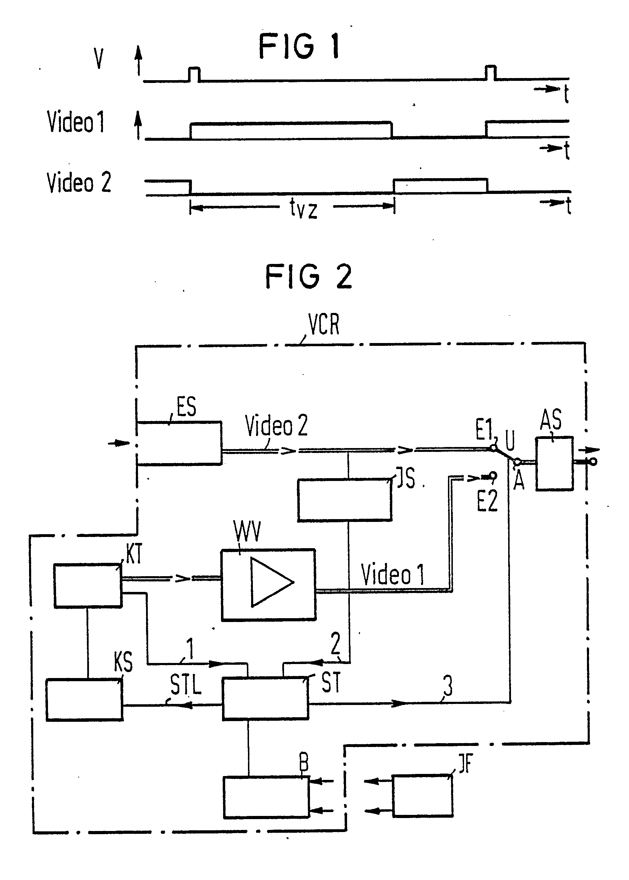

In FIG 1 ist ein Impulsdiagramm zu dem erfindungsgemäßen Verfahren dargestellt. Dieses Verfahren sieht vor, daß das durch die Drehung einer rotierenden und von einem Videoband mindestens teilweise umschlungenen Kopftrommel des Videorekorders bereitgestellte Videosignal Video 1 zum zweiten Videosignal Video 2 synchronisiert wird und daß durch Umschalten zwischen dem Videosignal Video 1 des Videorekorders und des zweiten Videosignales Video 2 ein oberes und ein unteres Teilbild am Bildschirm gebildet wird. Dazu wird ein Bildsynchronisierimpuls V aus dem zweiten Videosignal Video 2 gewonnen. Dieses zweite Videosignal Video 2 kann z. B. am Ausgang einer im Videorekorder enthaltenen HF-Eingangsschaltung anstehen. Beim erfindungsgemäßen Verfahren wird die Drehung der Kopftrommel auf das von der HF-Eingangsschaltung empfangene Bild Video 2 synchronisiert. Dabei wird der Lagengeberimpuls, der von der Kopftrommel des Videorekorders kommt, mit dem Bildsynchronisierimpuls V des zweiten Videosignales Video 2 verglichen und über die Kopfservoschaltung die Kopftrommel synchron zum Bildsynchronisiersignal V gesteuert. Am Bildschirm erscheint in dem nach FIG 1 dargestellten Ausführungsbeispiel etwa in den oberen zwei Drittel das Bild des ersten Videosignales Video 1, also des Videorekorders, während im unteren Drittel des Bildschirmes das zweite Videosignal Video 2, also das Fernsehsignal, dargestellt wird. Der Bildschirm wird zweckmäßigerweise an der Stelle des Überganges vom oberen Teilbild des ersten Videosignales Video 1 zum unteren Teilbild des zweiten Videosignales Video 2 durch eine waagrechte Linie geteilt. Die jeweils verdeckte Bildinformation eines Videosignales bleibt unsichtbar. Die Trennlinie ist in ihrer Höhe verstellbar. Damit kann die vom zweitrangigen Bild benötigte Bildschirmfläche auf ein Minimum reduziert werden.

Das Verhältnis der Höhen des oberen Teilbildes zum unteren Teilbild ist - wie oben ausgeführt - einstellbar und abhängig von der Verzögerungszeit $t_{vz}$, nach der das zweite Videosignal Video 2 am Bildschirm teilweise eingeblendet wird.

Handelt es sich bei der zweitrangigen Sendung z. B. um eine Fußballübertragung, so reicht sicherlich ein schmaler Streifen des Teilbildes am unteren oder oberen Bildrand des Bildschirmes aus, um zu erkennen, wann die Fußballübertragung beendet ist.

In der FIG 2 ist die Vorrichtung zur Durchführung des erfindungsgemäßen Verfahrens unter Verwendung eines Videorekorders VCR dargestellt. Der Aufbau eines Videorekorders VCR ist allgemein bekannt. Es wird deshalb im folgenden nur die für die vorliegende Erfindung relevante Wiedergabeeinrichtung des Videorekorders VCR beschrieben. Über eine HF-Eingangsstufe ES gelangt ein Videosignal Video 2, das z. B. das Videosignal eines gerade laufenden Fernsehprogrammes sein kann, an die erste Eingangsklemme E1 einer Umschalteinrichtung U, deren Ausgangsklemme A mit einer Ausgangsschaltung AS des Videorekorders VCR verbunden ist. An die zweite Eingangsklemme E2 der Umschalteinrichtung U gelangt das durch einen Wiedergabeverstärker WV verstärkte Videosignal Video 1, das durch die auf einer rotierenden Kopftrommel KT befindlichen Videoköpfe gewonnen wird. Gemäß der Erfindung weist der Videorekorder VCR eine Steuereinrichtung ST auf, an die die Steuerleitungen STL einer Kopfservostufe KS der Kopftrommel KT, Zuleitungen 1 für die Lagengeberimpulse der Kopftrommel KT, Zuleitungen 3 zur Umschalteinrichtung U und eine Bedieneinheit B angeschlossen sind. Weiterhin weist der Videorekorder VCR eine Impulstrennstufe IS auf, die dazu vorgesehen ist, mindestens ein Bildsynchronisiersignal V aus dem Videosignal Video 2 abzuleiten. Die Ausgangsklemmen dieser Impulstrennstufe IS sind mit Eingangsklemmen der Steuereinrichtung ST über die Zuleitung 2 in Verbindung. Durch die Steuereinrichtung ST ist das erste Videosignal Video 1 und das zweite Videosignal Video 2 zueinander synchronisierbar. Dazu werden in einer vorteilhaften Ausgestaltung der Erfindung die durch die Rotation der Kopftrommel KT entstehenden Lagengeberimpulse mittels an der Zuleitung 1 der Steuereinrichtung ST zugeführt und mit den an den Zuleitungen 2 anstehenden Bildsynchronisierimpulsen V des ersten Videosignales Video 1 verglichen und dadurch synchronisiert, daß die Kopfservostufe KS der Kopftrommel KT phasenrichtig angesteuert wird. Durch die Steuereinrichtung ST ist weiterhin die Umschalteinrichtung U schaltbar, so daß entweder das zweite Videosignal Video 2 oder das erste Videosignal Video 1 an die Ausgangsstufe AS des Videorekorders VCR schaltbar ist.

Das Umschalten der Umschalteinrichtung U durch die Steuereinrichtung ST erfolgt nach Maßgabe einer Bedieneinheit B, über die das Verhältnis des oberen Teilbildes zum unteren Teilbild am Bildschirm einstellbar ist. Dazu wird die im Zusammenhang mit der FIG 1 bereits erklärte Verzögerungszeit $t_{vz}$ variiert. Die Bedieneinheit kann z B. über eine Infrarot-Fernbedienung IF angesteuert werden.

Die Erfindung bietet den Vorteil, daß in einfacher Weise eine Bild-In-Bild-Einblendung bei Videorekordern auch ohne eine Bildspeichereinrichtung möglich ist. Die im Zusammenhang mit der Vorrichtung zur Durchführung des erfindungsgemäßen Verfahrens vorgestellte Umschalteinrichtung U ist in jedem Videorekorder bereits vorhanden. Diese Umschalteinrichtung U wird bei Videorekordern normalerweise zum umschalten zwischen Aufnahmebetrieb und Wiedergabebetrieb benutzt. Während es beim Aufnahmebetrieb nötig ist, die Kopftrommel mit dem Bildsynchronisierimpuls des aufzuzeichnenden Videosignales zu synchronisieren, wird bei Wiedergabebetrieb des Videorekorders nach dem bisherigen Stand der Technik die Kopftrommel auf eine konstante Geschwindigkeit geregelt. Das erfindungsgemäße Verfahren sieht dagegen vor, auch beim Wiedergabebetrieb zum Zwecke einer einfachen Bild-In-Bild-Darstellung die Kopftrommel mit dem Bildsynchronisiersignal des ersten Videosignales zu synchronisieren.

## Ansprüche

1. Verfahren zur Bild-In-Bild-Einblendung unter Verwendung eines ein erstes Videosignal bereitstellenden Videorekorders und einer ein zweites Videosignal bereitstellender Videosignalquelle, **dadurch gekennzeichnet,** daß das durch die Drehung einer rotierenden und mit einem Videoband mindestens teilweise umschlungenen Kopftrommel des Videorekorders VCR bereitgestellte Videosignal Video 1 zum zweiten Videosignal Video 2 synchronisiert wird, und daß durch Umschalten zwischen dem Videosignal Video 1 des Videorekorders VCR und des zweiten Videosignales Video 2 ein oberes und ein unteres Teilbild am Bildschirm gebildet wird.

2. Verfahren nach Anspruch 1, **dadurch gekennzeichnet,** daß die durch die Rotation der Kopftrommel entstehenden Lagengeberimpulse mit den Bildsynchronisierimpulsen V des zweiten Videosignales Video 2 verglichen und synchronisiert werden.

3. Verfahren nach Anspruch 1 oder 2, **dadurch gekennzeichnet,** daß das Verhältnis der Höhen des oberen Teilbildes zum unteren Teilbild einstellbar ist.

4. Vorrichtung zur Durchführung des Verfahrens nach einem der Ansprüche 1 bis 3, **dadurch gekennzeichnet,** daß der Videorekorder (VCR) die Merkmale aufweist:

- eine Umschalteinrichtung (U), durch die entweder das zweite Videosignal (Video 2) oder das erste Videosignal (Video 1) an die Ausgangsstufe (AS) des Videorekorders (VCR) schaltbar ist;

- eine Steuereinrichtung (ST) zum gesteuerten Umschalten der Umschalteinrichtung (U) in Abhängigkeit des Höhenverhältnisses des oberen Teilbildes zum unteren Teilbild;

-durch die Steuereinrichtung (ST) ist das erste Videosignal (Video 1) und das zweite Videosignal (Video 2) zueinander synchronisierbar.

5. Vorrichtung nach Anspruch 4, **dadurch gekennzeichnet,** daß an die Steuereinrichtung (ST) die Steuerleitung (STL) einer Kopfservostufe (KS) der Kopftrommel (KT) des Videorekorders (VCR), Zuleitungen (1) für die Lagenimpulse der Kopftrommel (KT), Zuleitungen (2) für das an einer Impulstrennstufe (IS) anstehenden Bildsynchronisiersignal (V) des zweiten Videosignales (Video 2), Zuleitungen (3) zur Umschalteinrichtungen (U) und eine Bedieneinheit (B) angeschlossen sind.

6. Vorrichtung nach Anspruch 5, **dadurch gekennzeichnet,** daß die Bedieneinheit (B) zur Einstellung des Verhältnisses der Höhen des oberen Teilbildes zum unteren Teilbild vorgesehen ist.

# FIG 1

# FIG 2